# FASCICULE DE BREVET EUROPEEN

(11) **EP 2 396 645 B1**
(45) Date de publication et mention de la délivrance du brevet: **09.01.2013**
(21) Numéro de dépôt: 10708323.0
(22) Date de dépôt: 10.02.2010
(51) Int. Cl.: G01N 21/67, G01N 21/68, H01J 37/32, H01J 61/02

(54) **LAMPE A DECHARGE POUR GDS A CHAMP MAGNETIQUE AXIAL**
GASENTLADUNGSLAMPE MIT AXIALEM MAGNETFELD
DISCHARGE LAMP FOR GDS WITH AN AXIAL MAGNETIC FIELD

(30) Priorité: 11.02.2009 FR 0950848
(43) Date de publication de la demande: 21.12.2011
(73) Titulaire: Horiba Jobin Yvon S.A.S., 91160 Longjumeau (FR)
(72) Inventeur: GANCIU - PETCU, Mihai, Bucarest (RO); UDREA, Virgil Mircea, Bucarest (RO); TEMPEZ, Agnès, F-91300 Massy (FR); CHAPON, Patrick, F-91140 Villebon Sur Yvette (FR)
(74) Mandataire: Chauvin, Vincent
(86) Numéro de dépôt international: PCT/FR2010/050226
(87) Numéro de publication internationale: WO 2010/092301

(56) Documents cités:
- US-A- 5 733 820
- US-A1- 2001 010 255
- HEINTZ M J ET AL: "Design and characterization of a planar magnetron radiofrequency glow discharge source for atomic emission spectrometry" SPECTROCHIMICA ACTA. PART B: ATOMIC SPECTROSCOPY, NEW YORK, NY, US, US, vol. 50, no. 9, 1 août 1995 (1995-08-01), pages 1109-1124, XP004727009 ISSN: 0584-8547

## Description

La présente invention concerne une lampe à décharge pour spectromètre de décharge luminescente (ou GDS pour Glow Discharge Spectrometer).

Un spectromètre à décharge luminescente permet d'analyser la composition chimique d'un échantillon soumis à un plasma. Le plasma crée une ablation en surface de l'échantillon. Un spectromètre de masse et/ou un spectromètre optique est utilisé pour identifier et quantifier les éléments chimiques incorporés dans le plasma lors de l'ablation. Les spectromètres à décharge luminescente permettent ainsi l'analyse précise de matériaux épais ou en couches minces (de quelques dizaines de nanomètres à quelques dizaines de microns d'épaisseur). Par ailleurs, une exposition prolongée de l'échantillon au plasma d'ablation produit un cratère d'érosion en profondeur. Une analyse du plasma en fonction de la durée d'ablation peut permettre de déterminer la composition de l'échantillon résolue en profondeur lorsque l'érosion se produit en creusant uniformément l'échantillon, c'est-à-dire quand le cratère d'ablation a un fond plat.

Dans un appareil de GDS, le plasma est obtenu par application d'un champ électrique (continu (DC), radio-fréquence (RF), éventuellement pulsé) dans une lampe à décharge comprenant une enceinte contenant un gaz neutre (Argon par exemple). L'échantillon est généralement disposé face à un tube anodique et la puissance électrique (par exemple RF) est appliquée au moyen d'un applicateur en contact avec l'échantillon. Les spectromètres de décharge luminescente donnent de bons résultats en particulier pour les échantillons sur support conducteur ou semi-conducteur (par ex. silicium), qui permettent un bon couplage du champ électrique dans le plasma. Par contre, dans le cas d'un échantillon sur substrat isolant ou comprenant des couches diélectriques épaisses (verre ou céramiques de plusieurs millimètres d'épaisseur par exemple), le plasma produit un échauffement de l'échantillon qui peut entraîner sa destruction. De plus, les flancs du cratère d'érosion sont généralement très inclinés par rapport à la surface de l'échantillon, ce qui nuit à la résolution en profondeur de la GDS.

Saprykin (Fresenius J. Anal. Chem., 355, p. 831-835, 1996) décrit une lampe à décharge luminescente dans laquelle sont superposés un champ électrique RF et un champ magnétique dont les lignes sont orientées de manière à confiner les électrons du plasma au voisinage de la surface d'un échantillon non conducteur (verre de 1 mm d'épaisseur). Le dispositif décrit dans la publication Saprykin comprend des aimants annulaires placés à l'arrière de l'échantillon. Le champ magnétique de quelques centaines de Gauss créé des lignes de champ refermées en anneaux sur l'échantillon. La superposition du champ électrique (E) et magnétique (B) permet une augmentation de la vitesse d'ablation, mais produit un cratère d'érosion annulaire, et non à fond plat, comme ce qui est recherché.

Par ailleurs, la spectrométrie de décharge luminescente s'applique difficilement dans le cas d'échantillons très minces ou dont le support est fragile (par exemple : films polymères de quelques dizaines de microns d'épaisseur), qui ne résistent pas au plasma d'ablation.

Afin de diminuer l'échauffement des échantillons soumis à un plasma d'ablation, on utilise différentes solutions. Une première solution repose sur l'utilisation d'un système de refroidissement poussé, par exemple sous forme de circulation d'azote liquide à l'arrière du porte échantillon. Le refroidissement permet d'obtenir des résultats sur certains échantillons, mais requiert la mise en oeuvre de matériel lourd et coûteux, ainsi que le raccordement à une source de fluide de refroidissement.

Une autre solution pour réduire l'échauffement des échantillons consiste à réduire la durée d'exposition au plasma en utilisant un champ RF pulsé (à une fréquence de l'ordre du kHz par exemple). Un champ pulsé permet dans certains cas de diminuer l'échauffement, mais ne permet pas d'améliorer notablement la forme du cratère d'ablation. De plus, certains échantillons polymères sont extrêmement fragiles et ne résistent pas même à un champ RF pulsé.

La présente invention a pour but d'améliorer la sensibilité et la résolution en profondeur d'un spectromètre à décharge luminescente tout en réduisant l'échauffement des échantillons induit par le plasma de GDS.

L'invention concerne plus particulièrement une lampe à décharge pour spectromètre à décharge luminescente comprenant un corps de lampe comprenant une enceinte à vide reliée d'une part à des moyens de pompage et d'autre part à des moyens d'injection d'un gaz inerte dans ladite enceinte, une première électrode cylindrique creuse d'axe longitudinal X-X', une seconde électrode apte à recevoir un échantillon à analyser et à maintenir l'échantillon face à une extrémité de l'électrode cylindrique creuse, des moyens de génération d'un champ électrique comprenant un applicateur pour appliquer un champ électrique continu (DC), impulsionnel, radio-fréquence (RF) ou hybride aux bornes desdites électrodes, apte à générer un plasma de décharge luminescente en présence dudit gaz, des moyens de couplage de la lampe à décharge à un spectromètre apte à mesurer au moins un composant dudit plasma et des moyens de génération de champ magnétique. Selon l'invention, les moyens de génération de champ magnétique sont aptes à générer un champ magnétique dont les lignes de champ sont orientées suivant l'axe X-X', ledit champ magnétique étant uniforme en intensité et en orientation sur une surface de l'échantillon au moins égale à la surface intérieure de l'électrode cylindrique creuse projetée selon la direction X-X'.

Selon différents modes de réalisation de l'invention, les moyens de génération de champ magnétique comprennent :
- au moins un aimant disposé à l'arrière de la seconde électrode, dont l'axe joignant les pôles est parallèle à l'axe X-X' et dont les dimensions transverses à l'axe X-X' sont supérieures à la surface intérieure projetée de l'électrode cylindrique creuse, et/ou
- un aimant de forme cylindrique plein coaxial avec l'axe X-X', ledit aimant étant disposé à l'arrière de l'électrode porte échantillon, et/ou
- au moins un aimant de forme annulaire disposé autour de l'électrode cylindrique creuse et dont l'axe joignant les pôles est parallèle à l'axe X-X' de ladite électrode, et/ou
- une bobine électromagnétique dont l'axe est parallèle à l'axe X-X'.

Selon un mode de réalisation particulier de l'invention, le matériau du ou desdits aimants est du NbFeB.

Selon un mode de réalisation préféré de l'invention, les moyens de génération de champ magnétique comprennent un ou plusieurs aimants disposés dans un coupleur métallique et maintenus dans ledit coupleur par des pièces électriquement isolantes, ledit coupleur étant relié d'une part à la seconde électrode et d'autre part à l'applicateur de champ électrique de manière à ce que l'axe magnétique du ou des aimants soit coaxial avec l'axe X-X'.

Selon un mode de réalisation particulier, la lampe à décharge de l'invention comprend des moyens de refroidissement aptes à refroidir les moyens de génération de champ magnétique.

Selon un mode de réalisation préféré de l'invention, les moyens de génération de champ magnétique ont des dimensions transverses à l'axe XX' supérieures à la surface intérieure projetée de l'électrode cylindrique creuse de manière à générer un champ magnétique uniforme en intensité et en orientation sur la surface de l'échantillon face à l'extrémité de l'électrode cylindrique creuse.

Selon un mode de réalisation particulier, la lampe à décharge de l'invention comprend des moyens de mesure de l'intensité du champ magnétique aptes à comparer l'intensité du champ magnétique au niveau de l'échantillon à un seuil prédéterminé.

L'invention concerne également un procédé d'amélioration d'une lampe à décharge pour spectromètre à décharge luminescente comprenant les étapes simultanées :
- d'application d'un champ électrique continu, impulsionnel, RF ou hybride aux bornes des électrodes d'une lampe à décharge apte à générer un plasma d'ablation en surface d'un échantillon, et
- d'application d'un champ magnétique axial dont les lignes sont parallèles à l'axe X-X' de l'électrode cylindrique creuse de ladite lampe à décharge, ledit champ magnétique étant uniforme en orientation et en intensité sur une surface de l'échantillon au moins égale à la surface intérieure de l'électrode cylindrique creuse projetée selon la direction X-X'.

L'invention s'applique notamment à l'analyse par GDS d'échantillons semi- conducteurs ou non-conducteurs.

Cette description donnée à titre d'exemple non limitatif fera mieux comprendre comment l'invention peut être réalisée en référence aux dessins annexés sur lesquels :
- la figure 1 représente schématiquement en coupe axiale une lampe à décharge pour GDS selon l'invention;
- la figure 2 représente en perspective un coupleur RF-magnétique selon un mode de réalisation de l'invention;
- la figure 3 représente une simulation des lignes de champ magnétique dans une lampe à décharge pour GDS selon l'invention vue en coupe ;
- la figure 4 représente des courbes d'analyse par GDS d'un premier échantillon obtenues au moyen d'un spectromètre à décharge luminescente selon l'art antérieur ;
- la figure 5 représente des courbes d'analyse par GDS d'un échantillon similaire à celui de la figure 4 obtenues au moyen d'un spectromètre à décharge luminescente selon l'art antérieur dont le porte échantillon est refroidi à l'azote liquide ;
- la figure 6 représente des courbes d'analyse par GDS d'un échantillon similaire à celui des figures 4 et 5 obtenues au moyen d'un spectromètre à décharge luminescente selon l'invention ;
- la figure 7 représente sur un même graphe des courbes d'analyse par GDS d'un second type d'échantillons obtenues au moyen d'un spectromètre à décharge luminescente selon l'art antérieur et selon l'invention ;
- la figure 8 est une courbe de profilométrie d'un cratère d'ablation dans un échantillon de verre épais obtenu suite à l'analyse au moyen d'un spectromètre à décharge luminescente GDS selon l'invention.

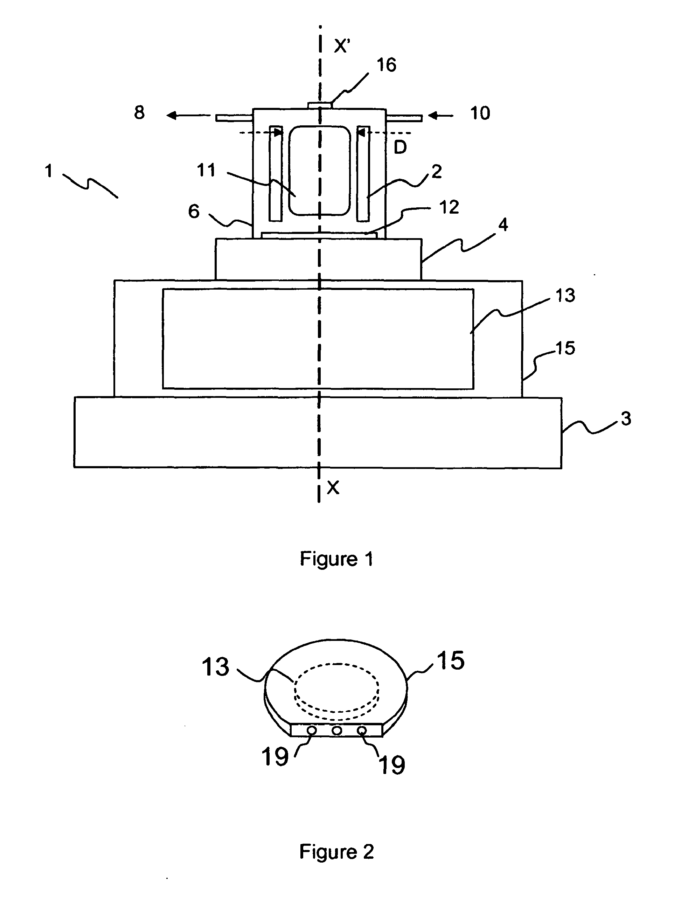

La figure 1 représente schématiquement en coupe axiale une lampe à décharge 1 pour GDS selon un mode de réalisation de l'invention. La lampe à décharge 1 comprend une enceinte à vide 6, raccordée à une pompe 8 et à une source d'un gaz inerte 10 (de l'Argon par exemple). La lampe à décharge 1 comprend une première électrode cylindrique creuse 2 et une seconde électrode 4 qui sert de porte échantillon. L'axe X-X' de l'électrode cylindrique 2 est l'axe de la lampe à décharge. Un échantillon 12 est maintenu sur l'électrode 4 face au tube anodique 2. Pour des échantillons plans, l'électrode 4 est généralement plane. Un applicateur RF 3 applique un champ électrique RF à l'électrode 4, l'électrode 2 étant reliée à la masse. Un plasma d'ablation 11 se forme à l'intérieur de l'anode et grave la surface de l'échantillon 12 exposée au plasma face à l'extrémité de l'anode cylindrique creuse 2. L'enceinte à vide comprend des moyens de couplage 16 de manière à coupler un spectromètre optique ou un spectromètre de masse pour analyser les espèces chimiques incorporées dans le plasma lors de la gravure de l'échantillon 12. Lorsqu'on utilise un spectromètre optique, les moyens de couplage 16 comprennent un hublot ou un lentille de manière à recevoir une partie de l'intensité optique du plasma d'émission. Lorsqu'on utilise un spectromètre de masse, les moyens de couplage 16 comprennent une petite ouverture vers une chambre sous vide reliée au spectromètre de masse de manière à ce que le spectromètre mesure une fraction des composants du plasma.

Dans l'exemple représenté sur la figure 1, la lampe à décharge 1 comprend un aimant 13 dont l'axe reliant les pôles est coaxial avec l'axe X-X' de la lampe. Cet aimant 13 génère un champ magnétique axial dont les lignes de champ sont quasiment parallèles à l'axe X-X' sur une surface de l'échantillon 12 au moins égale à la surface interne de l'anode 2 projetée sur l'échantillon selon la direction X-X', ledit champ magnétique étant uniforme en orientation et en intensité sur ladite surface projetée. Dans ce document, on entend par généralement uniforme un champ magnétique dont l'intensité varie de ± 10% et dont l'orientation varie de ± 5 degrés par rapport à l'axe X-X'. L'aimant 13 de la figure 1 est placé dans un coupleur 15 en contact électrique d'une part avec l'électrode porte échantillon 4 et d'autre part avec l'applicateur RF 3 de champ électrique. Le coupleur 15 assure la conduction électrique entre l'applicateur 3 et l'électrode 4. L'aimant 13 est isolé électriquement du boîtier métallique.

La figure 2 représente schématiquement un coupleur 15 magnétique-RF qui comprend un ou des aimants 13 d'axe polaire X-X'. Les aimants 13 sont de préférence des aimants en NdFeB disposés dans une structure métallique et maintenus par des isolateurs pour assurer un bon couplage RF entre l'applicateur RF 3 et l'échantillon. Les aimants 13 sont de préférence de type disques pleins mais ils peuvent avoir éventuellement d'autres formes (rectangulaires par exemple) permettant toutefois de générer un champ magnétique axial à l'intérieur de l'anode 2. Une autre géométrie d'aimant 13 possible est par exemple une géométrie toroïdale (disque perforé) qui permet de disposer le ou les aimants autour de l'anode 2. Une telle géométrie permet l'intégration de l'aimant 13 dans la structure de la lampe à décharge 1, sans modification du porte échantillon 4 ni de l'applicateur RF 3 à l'arrière de l'échantillon 12.

Dans tous les cas, il est souhaitable d'éviter l'échauffement des aimants 13 qui entraînerait leur démagnétisation rapide. Un système de refroidissement conventionnel peut avantageusement être monté de manière à refroidir les aimants 13 du dispositif. Le coupleur 15 représenté figure 2 comprend des moyens de refroidissement 19 par exemple une circulation de fluide. Selon un autre mode de réalisation (non représenté), le coupleur magnétique RF 15 peut être intégré dans l'applicateur RF 3.

L'intensité du champ magnétique au niveau de l'échantillon est au moins de plusieurs centaines de gauss. Il est souhaitable de faire périodiquement un contrôle de l'intensité du champ magnétique pour vérifier qu'il se situe toujours dans la gamme normale de fonctionnement du coupleur magnétique RF 15. Cette vérification peut être effectuée avec un tesla-mètre donnant une mesure absolue ou simplement avec un détecteur de champ magnétique externe ou disposé dans le coupleur 15 et permettant de s'assurer que le champ dépasse une certaine valeur minimum pour obtenir un effet de couplage dans le plasma.

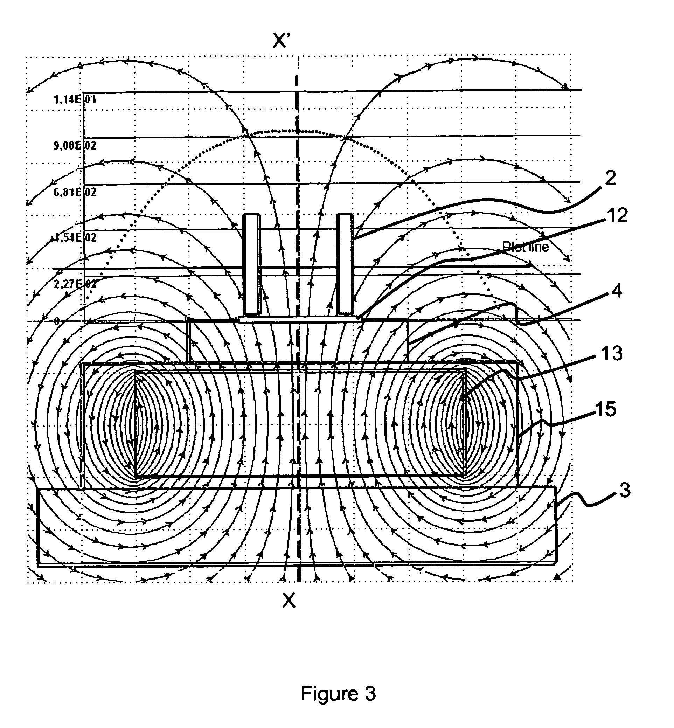

La figure 3 représente une simulation des lignes de champ magnétique dans une lampe à décharge pour GDS comprenant un applicateur RF et un coupleur magnétique 15 tels que décrits en lien avec les figures 1 et 2. Au niveau de l'échantillon 12, en face de l'extrémité de l'anode 2, les lignes de champ magnétique sont quasiment parallèles à l'axe X-X' et d'intensité quasiment uniforme.

Le champ magnétique axial peut par exemple être généré par un ou plusieurs aimants 13 placés à l'arrière de l'échantillon et du porte échantillon 4.

La taille des aimants 13 doit être notablement supérieure à la surface intérieure projetée selon l'axe X-X' de l'anode cylindrique 2 afin d'assurer l'uniformité en orientation et en intensité du champ magnétique sur la surface de l'échantillon 12 en regard de l'anode 2 et exposée au plasma d'ablation 11. Les dimensions des aimants 13 utilisés peuvent être choisies en fonction des applications, mais le dispositif recommandé consiste à disposer d'un type d'aimants 13 avec des dimensions optimisées pour une large gamme d'applications. Dans l'exemple de réalisation représenté schématiquement sur les figures 1 à 3, l'électrode 2 est un cylindre ayant une section circulaire de diamètre intérieur 4 mm. L'aimant 13 utilisé est un disque plein d'environ 28 mm. de diamètre qui génère un champ magnétique d'environ 600 Gauss à la surface de l'échantillon en contact avec le plasma d'ablation.

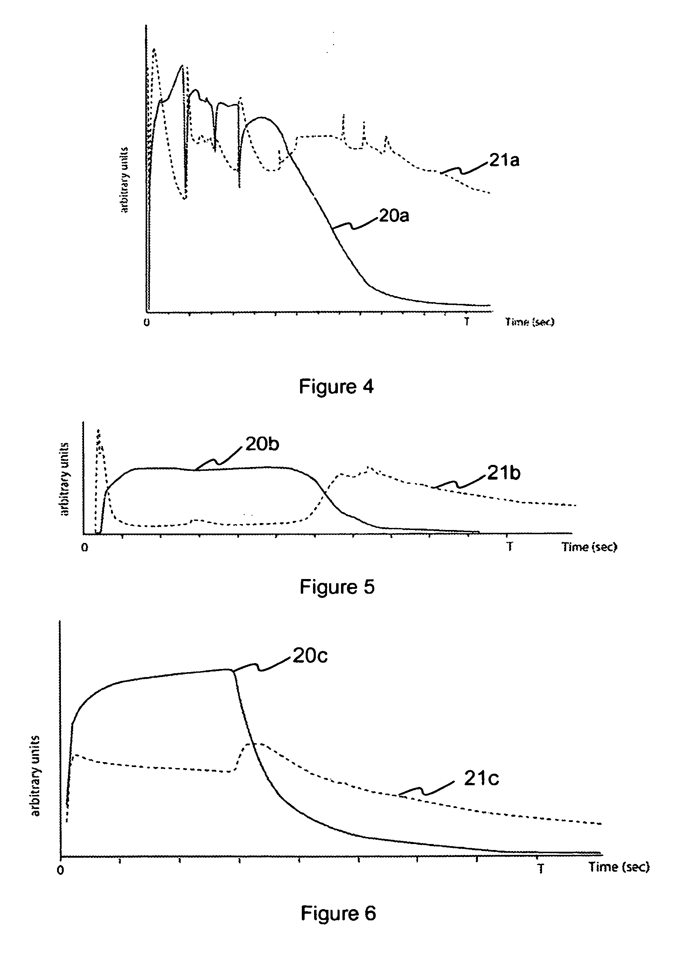

Les figures 4 à 6 illustrent des résultats d'analyse GDS obtenus sur un même type d'échantillon 12 de type film polymère recouvert sur une face d'une couche mince métallique et soumis à un plasma RF respectivement selon l'art antérieur (Fig. 4-5) et selon l'invention (Fig. 6). Les films polymères sont extrêmement fragiles et sont généralement carbonisés lors d'une exposition plasma dans un appareil GDS. Les courbes des figures 4 à 6 représentent les mesures en spectrométrie optique de décharge luminescente correspondant respectivement à la mesure d'un composant métallique (courbes 20a, 20b, 20c) et de carbone (courbes 21a, 21b, 21c).

Les courbes de la figure 4 sont obtenues dans une lampe à décharge selon l'art antérieur dans laquelle un champ électrique continu est appliqué à l'échantillon 12. Le porte échantillon n'est pas refroidi. Dans ces conditions, l'échantillon polymère subit un échauffement important dû au plasma. Les pics d'émission de carbone (courbe 21a) correspondent à des instants où l'échantillon polymère brûle en partie et produit des pics d'émission intenses. L'échantillon est alors fortement endommagé par la mesure GDS et la durée de mesure très faible. La courbe de mesure de la couche métallique (courbe 20a) comprend également des pics montrant que l'ablation n'est pas résolue en profondeur.

Les courbes de la figure 5 correspondent aux mêmes mesures de spectrométrie optique, dans une lampe à décharge où un champ électrique continu est appliqué à l'échantillon 12 et dans lequel le porte échantillon est refroidi par de l'azote liquide. La disparition des pics sur les courbes 21a et 21b indique que l'échauffement excessif de l'échantillon était responsable des pics sur les courbes 20a et 21a de la figure 4. Les mesures de la couche métallique (courbe 20b) et du substrat polymère (courbe 21 b) sont possibles sans endommager l'échantillon. Toutefois, la transition entre les couches métal et polymère est assez étalée, ce qui indique une érosion à la fois dans la couche métallique et dans le substrat et nuit à une analyse précise résolue en profondeur. De plus, le montage d'un refroidissement à l'azote liquide est complexe et onéreux, et difficilement adapté à certains échantillons.

Les courbes de la figure 6 correspondent aux mêmes mesures de spectrométrie optique, dans une lampe à décharge où un champ électrique continu et un champ magnétique axial sont appliqués simultanément à l'échantillon 12, sans refroidissement du porte échantillon. Le mode de fonctionnement non pulsé a été choisi car correspondant au cas le plus défavorable pour l'échauffement. On n'observe pas de pics sur les courbes 20c et 21c, ce qui indique que le champ magnétique axial permet de limiter l'échauffement de l'échantillon. De plus, le rapport signal sur bruit des courbes 20c et 21 c est nettement amélioré comparé aux courbes 20b et 21 b de la figure 5. On observe de manière plus nette l'interface entre la couche métallique, qui est gravée en premier lors de l'exposition au plasma, et le support polymère, ce qui traduit une meilleure résolution en profondeur. Le couplage d'un champ électrique RF et d'un champ magnétique permet donc de mesurer par GDS un échantillon polymère fragile, qui était auparavant difficile de mesurer sans un système de refroidissement poussé, tout en obtenant un excellent rapport signal sur bruit et une bonne résolution en profondeur.

L'appareil de l'invention trouve alors également de nouvelles applications pour l'analyse par GDS par exemple d'échantillons isolants épais. Il n'est généralement pas possible de mesurer des échantillons isolants épais par GDS en appliquant un champ électrique RF, même pulsé, du fait du mauvais couplage électrique entre l'électrode et le plasma. De plus, l'échauffement important induit par GDS sur des échantillons isolants, par exemple en verre, peut conduire à leur éclatement.

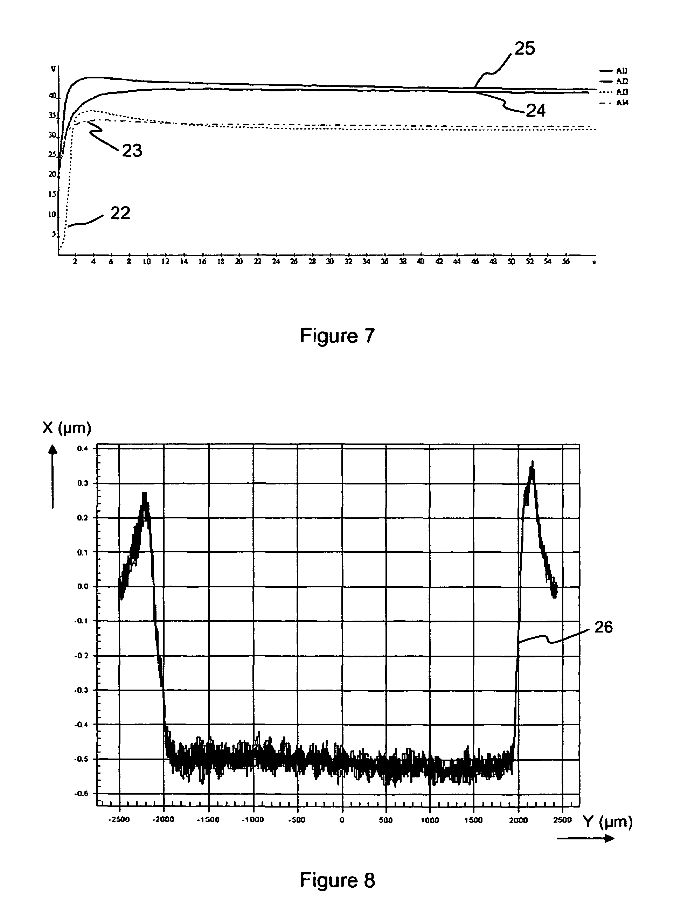

La figure 7 illustre un exemple d'analyse GDS obtenu sur différents échantillons d'alumine (Al₂O₃) soumis respectivement à un plasma RF continu (courbes 22 et 23) et à un plasma RF couplé à un champ magnétique axial (courbes 24 et 25). Deux mesures ont été effectuées dans chaque cas, pour évaluer la reproductibilité des mesures. On observe que le niveau des courbes 24 et 25 est supérieur d'environ 30 % au niveau des courbes 22 et 23. Cette augmentation traduit un meilleur couplage électromagnétique dans le plasma, qui permet de coupler efficacement une puissance plus importante dans le plasma. Ce meilleur couplage permet une érosion plus rapide, et donc une intensité de signal plus importante. On observe aussi dans cette application une amélioration du rapport signal sur bruit de la mesure GDS.

Un effet de l'application d'un champ magnétique axial est de rendre possible l'analyse d'échantillons sur substrat isolant, même épais (plusieurs mm).

Ainsi, la figure 8 montre le profil 26 du cratère d'ablation dans un échantillon de verre épais, suite à l'exposition de cet échantillon à un plasma RF couplé à un champ magnétique axial. Le profil 26 de la figure 8 montre un cratère profond de quelques microns et dont le fond est presque parfaitement plat. Le plasma de gravure permet ainsi une érosion anisotrope dans le volume du substrat de verre. Un tel cratère à fond plat n'a auparavant jamais été obtenu dans une lampe à décharge pour GDS utilisant uniquement un champ électrique RF continu ou pulsé pour ce type d'échantillon.

On constate que le couplage électromagnétique est effectué à travers l'échantillon isolant avec une efficacité supérieure. De plus, un effet remarquable du champ magnétique axial uniforme est de produire un cratère d'ablation dont le fond est quasiment plat. Cette propriété permet d'analyser la composition d'un échantillon en GDS avec une excellente résolution en profondeur et sur une profondeur de gravure importante.

Le seul inconvénient du dispositif de l'invention peut être une très légère érosion de l'anode au début de la décharge (identique à ce que l'on observe lorsque l'anode est de diamètre réduit).

En résumé, l'application d'un champ magnétique axial permet d'améliorer plusieurs aspects d'un spectromètre GDS.

Premièrement, on observe une amélioration du couplage du champ électromagnétique dans le plasma lorsque les échantillons à analyser sont isolants ou contiennent des couches diélectriques épaisses (verres de 1cm par exemple).

La distribution du plasma est modifiée par l'application conjointe d'un champ électrique et d'un champ magnétique axial. Contrairement aux dispositifs antérieurs qui cherchent à augmenter la densité du plasma au voisinage de la surface de l'échantillon, on observe, dans le dispositif de l'invention que le plasma est plus étendu le long de l'axe de l'anode 2 et plus confiné radialement, dans la direction perpendiculaire à l'axe XX'.

Pour obtenir un plasma d'érosion stable il faut passer du régime dit « alpha » (de haute impédance) à un régime dit « gamma » (de basse impédance) qui implique la formation d'une gaine de faible épaisseur avec un champ électrique continu perpendiculaire à la surface de l'échantillon.

Du fait de l'application d'un champ magnétique axial, les pertes du plasma sur les parois de l'anode sont minimisées : les électrons du plasma sont forcés à girer le long des lignes de champ magnétique et sont ainsi moins prompts à être perdus par diffusion.

Le confinement du plasma induit par le champ magnétique axial permet donc d'obtenir la transition alpha-gamma pour une puissance RF plus faible et en conséquence avec un budget thermique plus favorable pour l'échantillon diélectrique ou semi conducteur.

L'amélioration du couplage permet donc de travailler à une puissance appliquée plus faible, ou, pour une puissance appliquée identique, de réduire l'échauffement de l'échantillon (moins d'échauffement par collisions avec les neutres rapides, la densité de ceux-ci étant réduite au voisinage de l'échantillon).

L'invention permet ainsi de nouvelles applications de la spectrométrie de décharge luminescente (GDS) à certains échantillons minces et/ou fragiles car le dispositif de l'invention permet de réduire les effets destructifs d'une décharge luminescente sur ces échantillons.

L'invention permet d'améliorer de manière importante d'une part le rapport signal sur bruit des mesures GDS, d'autre part la résolution en profondeur de ces mesures, grâce à l'obtention d'un cratère d'érosion à fond plat. L'amélioration de ces performances est particulièrement importante pour des échantillons semi-conducteurs ou non conducteurs.

L'invention permet d'élargir le champ d'application de la GDS à des échantillons isolants, ou comprenant des couches isolantes, ainsi qu'à des échantillons minces et/ou fragiles.

## Revendications

1. Lampe à décharge (1) pour spectromètre à décharge luminescente comprenant :
- un corps de lampe comprenant une enceinte à vide (6) reliée d'une part à des moyens de pompage (8) et d'autre part à des moyens d'injection d'un gaz inerte (10) dans ladite enceinte (6) ;
- une première électrode cylindrique creuse (2) d'axe longitudinal X-X' ;
- une seconde électrode (4) apte à recevoir un échantillon (12) à analyser et à maintenir l'échantillon (12) face à une extrémité de l'électrode cylindrique (2) ;
- des moyens de génération d'un champ électrique comprenant un applicateur (3) pour appliquer un champ électrique continu (DC), impulsionnel, radiofréquence (RF) ou hybride aux bornes desdites électrodes (2) et (4), apte à générer un plasma (11) de décharge luminescente en présence du gaz (10) ;
- des moyens de couplage (16) de la lampe à décharge à un spectromètre apte à mesurer au moins un composant dudit plasma (11) et
- des moyens de génération de champ magnétique ;
**caractérisée en ce que** :
- les moyens de génération de champ magnétique sont aptes à générer un champ magnétique dont les lignes de champ sont orientées suivant l'axe X-X', ledit champ magnétique étant uniforme en orientation et en intensité sur une surface de l'échantillon (12) au moins égale à la surface intérieure de l'électrode cylindrique creuse (2) projetée selon la direction X-X'.

2. Lampe à décharge selon la revendication 1 **caractérisée en ce que** les moyens de génération de champ magnétique comprennent au moins un aimant (13) disposé à l'arrière de l'électrode (4), dont l'axe joignant les pôles est parallèle à l'axe X-X' et dont les dimensions transverses à l'axe X-X' sont supérieures à la surface intérieure projetée de l'électrode (2).

3. Lampe à décharge selon la revendication 1 ou 2 caractérisée en ce les moyens de génération de champ magnétique comprennent un aimant (13) de forme cylindrique plein coaxial avec l'axe X-X' disposé à l'arrière de l'électrode (4).

4. Lampe à décharge selon l'une des revendications 1 à 3 **caractérisée en ce que** les moyens de génération de champ magnétique comprennent au moins un aimant (13) de forme annulaire disposé autour de l'électrode cylindrique creuse (2) et dont l'axe joignant les pôles est parallèle à l'axe X-X' de ladite électrode (2).

5. Lampe à décharge selon l'une des revendications 1 à 4 **caractérisée en ce que** les moyens de génération de champ magnétique comprennent un ou plusieurs aimants en NbFeB.

6. Lampe à décharge selon l'une des revendications 1 à 5 caractérisée en ce les moyens de génération de champ magnétique comprennent un ou plusieurs aimants (13) disposés dans un coupleur métallique (15) et maintenus dans ledit coupleur (15) par des pièces électriquement isolantes, ledit coupleur (15) étant relié d'une part à la seconde électrode (4) et d'autre part à l'applicateur (3) de champ électrique de manière à ce que l'axe magnétique du ou desdits aimants (13) soit coaxial avec l'axe X-X' .

7. Lampe à décharge selon l'une des revendications 1 à 6 **caractérisée en ce que** les moyens de génération de champ magnétique comprennent une bobine électromagnétique dont l'axe est parallèle à l'axe X-X'.

8. Lampe à décharge selon l'une des revendications 1 à 7 **caractérisée en ce qu'**elle comprend des moyens de refroidissement aptes à refroidir les moyens de génération de champ magnétique.

9. Lampe à décharge selon l'une des revendications 1 à 8 **caractérisée en ce que** les moyens de génération de champ magnétique ont des dimensions transverses à l'axe XX' supérieures à la surface intérieure projetée de l'électrode cylindrique creuse (2) de manière à générer un champ magnétique uniforme en intensité et en orientation sur la surface de l'échantillon (12) face à l'extrémité de ladite électrode (2).

10. Lampe à décharge selon l'une des revendications 1 à 9 **caractérisée en ce qu'**elle comprend des moyens de mesure de l'intensité du champ magnétique aptes à comparer l'intensité du champ magnétique au niveau de l'échantillon (12) à un seuil prédéterminé.

11. Procédé d'amélioration d'une lampe à décharge (1) pour spectromètre à décharge luminescente comprenant les étapes de :
- application d'un champ électrique continu, impulsionnel, RF ou hybride aux bornes des électrodes (2, 4) d'une lampe à décharge selon l'une des revendications 1 à 10 apte à générer un plasma d'ablation en surface d'un échantillon (12) ;
et **caractérisé en ce qu'**il comprend l'étape :
- d'application simultanée d'un champ magnétique axial dont les lignes sont parallèles à l'axe X-X' de l'électrode cylindrique creuse (2) de ladite lampe à décharge, ledit champ magnétique étant uniforme en orientation et en intensité sur une surface de l'échantillon (12) au moins égale à la surface intérieure de l'électrode cylindrique (2) projetée selon la direction X-X'.

## Claims

1. A glow discharge spectrometer discharge lamp (1) comprising:
a lamp body having a vacuum enclosure (6) connected firstly to pump means (8) and secondly to injector means (10) for injecting an inert gas into said closure (6);
a hollow cylindrical first electrode (2) of longitudinal axis X-X';
a second electrode (4) suitable for receiving a sample (12) for analysis and for holding the sample (12) facing one end of the cylindrical electrode (2);
electric field generator means comprising an applicator (3) for applying to the terminals of said electrodes (2 and 4) an electric field that is continuous, pulsed, radiofrequency (RF), or hybrid, and that is suitable for generating a glow discharge plasma (11) in the presence of the gas (10);
coupler means (16) for coupling the discharge lamp to a spectrometer that is suitable for measuring at least one component of said plasma (11); and
magnetic field generator means for generating a magnetic field;
the lamp being **characterized in that**:
the magnetic field generator means are suitable for generating a magnetic field having field lines that are oriented along the axis X-X', said magnetic field being uniform in orientation and in intensity over an area of the sample (12) that is not less than the inside area of the hollow cylindrical electrode (2) as projected along the direction X-X'.

2. A discharge lamp according to claim 1, **characterized in that** the magnetic field generator means comprise at least one magnet (13) arranged behind the electrode (4), with the axis joining its poles being parallel to the axis X-X' and with its dimensions in directions transverse to the axis X-X' being greater than the projected inside area of the electrode (2).

3. A discharge lamp according to claim 1 or claim 2, **characterized in that** the magnetic field generator lines comprise a magnet (13) in the form of a solid cylinder ot axis X-X' and arranged behind the electrode (4).

4. A discharge lamp according to any one of claims 1 to 3, **characterized in that** the magnetic field generator means comprise at least one magnet (13) of annular shape arranged around the hollow cylindrical electrode (2) and for which the axis joining its poles is parallel to the axis X-X' of said electrode (2).

5. A discharge lamp according to any one of claims 1 to 4, **characterized in that** the magnetic field generator means comprise one or more NbFeB magnets.

6. A discharge lamp according to any one of claims 1 to 5, **characterized in that** the magnetic generator means comprise one or more magnets (13) arranged in a metal coupler (15) and held in said coupler (15) by electrically insulating parts, said coupler (15) being connected firstly to the second electrode (4) and secondly to the electric field applicator (3) in such a manner that the magnetic axis of said magnet(s) (13) coincide(s) with the axis X-X'.

7. A discharge lamp according to any one of claims 1 to 6, **characterized in that** the magnetic field generator means comprise an electromagnetic coil of axis parallel to the axis X-X'.

8. A discharge lamp according to any one of claims 1 to 7, **characterized in that** it includes cooling means suitable for cooling the magnetic field generator means.

9. A discharge lamp according to any one of claims 1 to 8, **characterized in that** the magnetic field generator means present dimensions extending transversely relative to the axis X-X' that are greater than the projected inside area of the hollow cylindrical electrode (2) so as to general magnetic field that is uniform in intensity and in orientation over the area of the sample (12) facing the end of said electrode (2).

10. A discharge lamp according to any one of claims 1 to 9, **characterized in that** it includes means for measuring the intensity of the magnetic field and suitable for comparing the intensity of the magnetic field at the sample (12) with a predetermined threshold.

11. A method of improving a glow discharge spectrometer discharge lamp (1), the method comprising the steps of:
applying a continuous, pulsed, RF, or hybrid electric field to the terminals of the electrodes (2, 4) of a discharge lamp according to any one of claims 1 to 10, and suitable for generating a plasma for ablating the surface of a simple (12); and **characterized in that** it includes the step of:
simultaneously applying an axial magnetic field of field lines parallel to the axis X-X' of the hollow cylindrical electrode (2) of said discharge lamp, said magnetic field being uniform in orientation and in intensity over an area of the sample (12) that is not less than the inside area of the cylindrical electrode (2) as projected along the direction X-X'.

## Patentansprüche

1. Gasentladungslampe (1) für Glimmentladungsspektrometer, die Folgendes umfasst:
- einen Lampenkörper, der einen Vakuumbehälter (6) umfasst, der einerseits mit Pumpmitteln (8) und andererseits mit Mitteln zur Einspritzung eines Inertgases (10) in den Behälter (6) verbunden ist;
- eine erste zylindrische Hohlelektrode (2) mit der Längsachse X-X';
- eine zweite Elektrode (4), die geeignet ist, eine zu analysierende Probe (12) aufzunehmen und die Probe (12) gegenüber einem Ende der zylindrischen Elektrode (2) zu halten;
- Mittel zur Erzeugung eines elektrischen Feldes, die einen Applikator (3) zum Anlegen eines elektrischen Gleichstrom- (DC), Impuls-, Hochfrequenz- (HF) oder hybriden Felds an die Anschlüsse der Elektroden (2) und (4) umfassen, das geeignet ist, beim Vorhandensein des Gases (10) ein Glimmentladungsplasma (11) zu erzeugen;
- Mittel (16) zur Kopplung der Gasentladungslampe an ein Spektrometer, das geeignet ist, mindestens einen Bestandteil des Plasmas (11) zu messen; und
- Magnetfeld-Erzeugungsmittel;
**dadurch gekennzeichnet, dass**:
- die Magnetfeld-Erzeugungsmittel geeignet sind, ein Magnetfeld zu erzeugen, dessen Feldlinien gemäß der Achse X-X' ausgerichtet sind, wobei die Ausrichtung und die Stärke des Magnetfelds auf einer Fläche der Probe (12), die mindestens gleich der gemäß der Richtung X-X" projizierten Innenfläche der zylindrischen Hohlelektrode (2) ist, gleichmäßig sind.

2. Gasentladungslampe nach Anspruch 1, **dadurch gekennzeichnet, dass** die Magnetfeld-Erzeugungsmittel mindestens einen Magneten (13) umfassen, der hinter der Elektrode (4) angeordnet ist, dessen Achse, die die Pole verbindet, parallel zur Achse X-X" ist, und dessen Abmessungen quer zur Achse X-X' größer sind als die projizierte Innenfläche der Elektrode (2).

3. Gasentladungslampe nach Anspruch 1 oder 2, **dadurch gekennzeichnet, dass** die Magnetfeld-Erzeugungsmittel einen Magneten (13) mit zylindrischer Form umfassen, der genau gleichachsig zur Achse X-X' ist und hinter der Elektrode (4) angeordnet ist.

4. Gasentladungslampe nach einem der Ansprüche 1 bis 3, **dadurch gekennzeichnet, dass** die Magnetfeld-Erzeugungsmittel mindestens einen ringförmigen Magneten (13) umfassen, der um die zylindrische Hohlelektrode (2) herum angeordnet ist und dessen Achse, die die Pole verbindet, parallel zur Achse X-X' der Elektrode (2) ist.

5. Gasentladungslampe nach einem der Ansprüche 1 bis 4, **dadurch gekennzeichnet, dass** die Magnetfeld-Erzeugungsmittel einen oder mehrere Magneten aus NbFeB umfassen.

6. Gasentladungslampe nach einem der Ansprüche 1 bis 5, **dadurch gekennzeichnet, dass** die Magnetfeld-Erzeugungsmittel einen oder mehrere Magneten (13) umfassen, die in einem metallischen Koppler (15) angeordnet sind und durch elektrisch isolierende Teile in dem Koppler (15) gehalten werden, wobei der Koppler (15) einerseits mit der zweiten Elektrode (4) und andererseits mit dem Applikator (3) des elektrischen Feldes verbunden ist, derart, dass die magnetische Achse des oder der Magneten (13) gleichachsig mit der Achse X-X' ist.

7. Gasentladungslampe nach einem der Ansprüche 1 bis 6, **dadurch gekennzeichnet, dass** die Magnetfeld-Erzeugungsmittel eine elektromagnetische Spule umfassen, deren Achse parallel zur Achse X-X' ist.

8. Gasentladungslampe nach einem der Ansprüche 1 bis 7, **dadurch gekennzeichnet, dass** sie Kühlungsmittel umfasst, die geeignet sind, die Magnetfeld-Erzeugungsmittel zu kühlen.

9. Gasentladungslampe nach einem der Ansprüche 1 bis 8, **dadurch gekennzeichnet, dass** die Magnetfeld-Erzeugungsmittel Abmessungen aufweisen, die quer zur Achse X-X' größer sind als die projizierte Innenfläche der zylindrischen Hohlelektrode (2), derart, dass ein Magnetfeld mit gleichmäßiger Stärke und Ausrichtung auf der Fläche der Probe (12) gegenüber dem Ende der Elektrode (2) erzeugt wird.

10. Gasentladungslampe nach einem der Ansprüche 1 bis 9, **dadurch gekennzeichnet, dass** sie Mittel zum Messen der Stärke des Magnetfelds umfasst, die geeignet sind, die Stärke des Magnetfelds im Bereich der Probe (12) mit einem vorbestimmten Schwellenwert zu vergleichen.

11. Verfahren zur Verbesserung einer Gasentladungslampe (1) für Glimmentladungsspektrometer, das die folgenden Schritte umfasst:
- Anlegen eines elektrischen Gleichstrom-, Impuls-, HF- oder hybriden Felds an die Anschlüsse der Elektroden (2, 4) einer Gasentladungslampe nach einem der Ansprüche 1 bis 10, das geeignet ist, auf der Fläche einer Probe (12) ein Ablationsplasma zu erzeugen;
und **dadurch gekennzeichnet, dass** es den folgenden Schritt umfasst:
- gleichzeitiges Anlegen eines axialen Magnetfelds, dessen Linien parallel zur Achse X-X' der zylindrischen Hohlelektrode (2) der Gasentladungslampe sind, wobei die Ausrichtung und die Stärke des Magnetfelds auf einer Fläche der Probe (12), die mindestens gleich der gemäß der Richtung X-X' projizierten Innenfläche der zylindrischen Hohlelektrode (2) ist, gleichmäßig sind.
